# NEUE EUROPÄISCHE PATENTSCHRIFT

(11) **EP 0 208 256 B2**
(45) Veröffentlichungstag und Bekanntmachung des Hinweises auf die Entscheidung über den Einspruch: **18.01.1995**
(45) Hinweis auf die Patenterteilung: 27.02.1991
(21) Anmeldenummer: 86109034.8
(22) Anmeldetag: 02.07.1986
(51) Int. Cl.: G05D 23/20

(54) **Einrichtung zur Regelung der Raumtemperatur**
Space temperature regulation device
Dispositif de régulation de la température d'un local

(30) Priorität: 06.07.1985 DE 3524230
(43) Veröffentlichungstag der Anmeldung: 14.01.1987
(73) Patentinhaber: HONEYWELL B.V., NL-1101 EA Amsterdam Z.O. (NL)
(72) Erfinder: Berkhof, Hendrikus, Emmen (NL)
(74) Vertreter: Rentzsch, Heinz, Dipl.-Ing.

(56) Entgegenhaltungen:
- EP-A- 0 111 075
- EP-B- 0 012 936
- DE-A- 1 615 500
- DE-A- 3 114 942
- US-A- 4 460 123
- PT ELEKTROTECHN. ELEKTRON., Band 33, Juli 1978, Seiten 373-381, Den Haag, NL; H. TH. KLEIN WOLTERINK: "Energiebesparing en besturing van de huisinstallatie met een microprocessor"

## Beschreibung

Die Erfindung bezieht sich auf eine Temperaturregeleinrichtung gemäß Gattungsbegriff des Anspruchs 1. Zur energiesparenden und gleichwohl eine möglichst gleichbleibende Raumtemperatur erzielenden Regelung der Wärmezufuhr oder Kühlung von Gebäuden und Räumen sind unterschiedliche Verfahren bekannt. Bei einem dieser Verfahren wird in Abhängigkeit von der Außentemperatur die Vorlauftemperatur des Heizwassers geregelt,und in den einzelnen Räumen sind Heizkörperthermostate vorgesehen, welche die Wärmezufuhr zum betreffenden Raum in Abhängigkeit von der Sollwerteinstellung des Thermostaten steuern. Die Vorlauftemperatur wird entweder zyklisch durch Ein- und Ausschalten eines Brenners oder durch kontinuierliches Verstellen eines Mischventils verändert. In beiden Fällen wirkt der Raumtemperaturfühler nicht unmittelbar auf die Wärmequelle, d. h. den Brenner ein, sondern kann nur die von der Wärmequelle erzeugte Wärme dem Wärmebedarf des Raums entsprechend an diesen abgeben oder die Wärmezufuhr zu diesem Raum unterbinden. Eine außentemperaturgeführte Vorlauftemperaturregelung läßt zahlreiche Größen, welche den Wärmebedarf beeinflussen, unberücksichtigt, beispielsweise die Wärmeisolation und Wärmespeicherfähigkeit des Gebäudes, die Einwirkung von Sonneneinstrahlung, die Abkühlung durch starken Wind oder Regen sowie alle Einflüsse, die sich aus der Benutzung des Raums ergeben, wie das Öffnen und Schließen von Fenstern, das Öffnen und Schließen von Heizkörperventilen, Änderungen der Sollwerteinstellung anderer Raumthermostate, eine Nachtabsenkung, die Wärmeentwicklung von elektrischen Geräten und Leuchten, sowie die Besetzung des Raums selbst mit wenigen oder zahlreichen Personen. Eine solche Vorlauftemperaturregelung vermag also keine optimale Energieausnutzung des dem Brenner zugeführten Brennstoffs zu gewährleisten.

Bei anderen bekannten Heizvorrichtungen wird der Brenner oder eine andere Wärmequelle unmittelbar von einem Raumthermostaten ein- und ausgeschaltet, der in dem wichtigsten Raum des Gebäudes, im Falle einer Wohnung also im Wohnraum angeordnet ist. Im eingeschalteten Zustand läuft der Brenner mit voller Leistung, und zwar auch dann, wenn nur eine geringe Temperaturdifferenz zwischen Sollwert und Istwert zu beseitigen ist. Er läuft in diesem Fall nur für eine kurze Zeit. Dies bedeutet aber, daß der Brenner bei geringem Wärmebedarf nur selten eingeschaltet wird und für kurze Zeiträume tätig ist. Da eine gewisse Zeit verstreicht, bis die vom Brenner erzeugte Primärwärme über den Wärmetauscher das Wärmeübertragungsmedium, zumeist Warmwasser, erhitzt hat und dieses Medium in den mit dem Thermostaten ausgestatteten Raum gelangt ist, und darüber hinaus erst eine Erwärmung der Raumluft erfolgt sein muß, bevor der Thermostat ein Ansteigen der Raumtemperatur über den eingestellten Sollwert hinaus feststellt und dann den Brenner stillsetzt, ist auch hier die Erzeugung überschüssiger, eigentlich nicht benötigter Wärmeenergie unvermeidlich. Man hat diesen Mangel zwar bereits durch die Verwendung von Raumthermostaten mit thermischer Rückführung beizukommen versucht, wo beim Einschalten des Thermostaten ein elektrischer Widerstand die Umgebungstemperatur des Temperaturfühlers bereits erhöht, ehe die Raumtemperatur tatsächlich ansteigt. Befriedigend sind die Ergebnisse jedoch in erster Linie deshalb nicht, weil der Zeitverzug zwischen Brennereinschaltung und Erwärmungsbeginn im Raum sehr stark von Art und Dimensionierung der Heizeinrichtung und natürlich auch von der Größe des Raums abhängt. Besonders bei langen Zuleitungen zwischen Brenner bzw. Heizkessel und Wohnraum lassen sich auf diese Weise befriedigende Ergebnisse nicht erzielen.

Weiterhin ist aus DE-A1-31 14 942 eine Regeleinrichtung für den gasbefeuerten Heizkessel einer WarmwasserHeizungsanlage bekannt, welche die Brennstoffzufuhr zum Brenner nicht in Abhängigkeit von der Stellung des Thermostatschalters ein- und abschaltet, sondern in Abhängigkeit vom Wärmebedarf, gemessen anhand der Differenz von Vorlauf- und Rücklauftemperatur des Heizwassers kontinuierlich regelt und gleichzeitig zur Erzielung einer stets optimalen Verbrennung auch die Menge der zugeführten Verbrennungsluft der jeweiligen Brennstoffmenge automatisch anpaßt.

Ferner ist es aus EP-B1-00 12 936 bekannt, zum Optimieren des Energieverbrauchs in Gebäuden die Zeitspanne zu messen, welche die Heizanlage benötigt, um das Gebäude von einer niedrigeren Nachttemperatur auf die höhere Raumtemperatur zu Beginn der Belegtzeit des Gebäudes am Morgen aufzuheizen. Die gemessene Zeitspanne wird unter Berücksichtigung der Außentemperatur zur Berechnung der am darauffolgenden Tage benötigten Aufheizzeit verwendet.

In DE-A-16 15 500 wird schließlich eine Vorrichtung zum selbsttätigen Steuern der Aufladeeinrichtung einer elektrischen Speicherheizung beschrieben. Diese wird innerhalb einer vorgegebenen Zeitspanne während der Nacht aufgeladen, während am Tage die gespeicherte Wärme im Bedarfsfall mittels eines durch einen Raumthermostaten gesteuerten Lüfters an den zu beheizenden Raum abgegeben wird. Um unnötige Wärmeverluste zu vermeiden, soll der Speicher jeweils nur mit einer solchen Wärmemenge aufgeladen werden, wie sie am darauffolgenden Tag voraussichtlich gebraucht wird. Hierzu sind Schaltmittel vorgesehen, welche die Aufladeeinrichtung während der Nachtstunden jeweils für eine Zeitspanne einschaltet, welche von der Gesamtbetriebsdauer des Lüfters am vorangegangenen Tage abhängt. Diese Betriebsdauer des Lüfters läßt sich durch Summieren der Schließzeiten des Raumthermostaten ermitteln.

Eine Regeleinrichtung gemäß Gattungsbegriff des Anspruchs 1 ist aus US-A 44 60 123 bekannt. Ein Raumthermostat steuert dort über eine Regeleinrichtung einen Leistungsschalter, der einen Infrarot-Strahlungsheizer ein- und ausschaltet. Ein mit einem Taktgeber ausgestatteter Mikroprozessor gibt für die Bewertung des Brennerbetriebs dienende Bezugsperioden von einer Stunde Einschaltzeit und 15 Minuten Ausschaltzeit sowie innerhalb dieser Perioden Schaltzyklen von 10 Minuten Dauer vor. Ferner stellt er ein Programm mit 10 abgestaffelten Puls/Pausenverhältnissen während jedes Schaltzyklus zur Verfügung, welches abgestuft Einschaltintervalle von 15 bis 100 Prozent der Zykluszeit von 10 Minuten aufweist. Bei Einschaltung der Heizvorrichtung durch den Thermostaten beginnt diese mit einem Puls/Pausenverhältnis von 100 Prozent. Sobald der Thermostat seinen Kontakt eröffnet und keine weitere Wärmezufuhr anfordert, wird festgestellt, ob die Dauer der bisherigen Wärmezufuhr länger ist als die vorgegebene Bezugsperiode von einer Stunde. Hat der Thermostat vorher abgeschaltet, so wählt der Prozessor das nächst niedrigere Puls/Pausenverhältnis aus, welches bei der nächsten Wärmeanforderung die Einschaltdauer des Brenners pro Schaltzyklus bestimmt, usw. Dieser Vergleich wird bei jedem Schaltvorgang des Thermostaten wiederholt. Ist beim Abschalten des Thermostaten die verstrichene Einschaltdauer länger als die Bezugsperiode von einer Stunde, so wird das Puls/Pausenverhältnis für die nächste Einschaltung um eine Stufe z.B. von 65 auf 75 Prozent erhöht. Mit dem Eingang des Abschaltsignals vom Raumthermostaten beginnt der Prozessor ferner die Abschaltzeit bis zur nächsten Wiedereinschaltung durch den Raumthermostaten zu messen. Ist diese Abschaltzeit länger als die Bezugsperiode von 15 Minuten, so wird das Puls/Pausenverhältnis um eine Stufe erniedrigt, beispielsweise von 85 Prozent auf 75 Prozent. Wieder beginnt der Prozessor beim Schließen des Kontakts des Raumthermostaten die Schließzeit zu messen, um diese am Ende der Wärmeanforderung durch den Thermostaten mit der Bezugsperiode von einer Stunde zu vergleichen.

Auf diese Weise wird die Einschaltdauer des Brenners pro Zyklus dem tatsächlichen Wärmebedarf schrittweise angepaßt, wodurch man eine Verringerung der Temperaturschwankungen im beheizten Raum erreicht.

Durch die Erfindung soll eine Temperaturregeleinrichtung der zuvorgenannten Art geschaffen werden, welche ebenfalls ohne zusätzlichen Außentemperaturfühler eine überschwingungsfreie und energiesparende Raumtemperaturregelung durch direkte Beeinflussung der Wärmequelle ermöglicht. Diese Aufgabe wird gelöst durch die im Anspruch 1 gekennzeichnete Erfindung. Sie zeichnet sich in erster Linie dadurch aus, daß die Zeitverhältnisse beim zyklischen Öffnen und Schließen des Raumthermostatschalters zur Bestimmung des tatsächlichen Wärmebedarfs im betreffenden Raum ausgenutzt werden und damit auch die beispielsweise bei einer außentemperaturabhängig geführten Heizungsregelung nicht berücksichtigten Einflußgrößen automatisch mit in das Meßergebnis eingehen. Außerdem wird der Brenner stets mit optimalem Wirkungsgrad betrieben und keine unnötige Wärme erzeugt. Dies stellt sowohl hinsichtlich der gewünschten Vergleichmäßigung der Raumtemperatur als auch hinsichtlich der Energieausnutzung eine merkliche Verbesserung gegenüber den eingangs geschilderten bekannten Einrichtungen dar. Dadurch, daß man die Einschaltabstände der Wärmequelle nicht dem jeweiligen Wärmebedarf überläßt, sondern einen vorgegebenen Schaltzyklus vorgibt, gelingt es, aus der Einschaltdauer der Wärmequelle pro Einschaltzyklus eine dem Wärmebedarf entsprechende, sich als Zeitspanne darstellende Meßgröße zu gewinnen, welche ihrerseits dann durch Vergleich mit einer gewünschten, ebenfalls einstellbaren Einschaltdauer pro Schaltzyklus ein Regelabweichungssignal liefert, das die jeweilige Brennerleistung oder allgemein ausgedrückt die pro Zeiteinheit zugeführte Wärmemenge derart steuert, daß die gewünschte Einschaltdauer pro Schaltzyklus erreicht wird. Damit werden ohne zusätzlichen Außentemperaturfühler alle den Temperaturverlauf im Raum beeinflussenden Größen automatisch mit erfaßt und zur Bestimmung der dem Raum zuzuführenden Wärme bzw. Kühl-leistung mit herangezogen. Vorteilhafte Weiterbildungen der Erfindung ergeben sich aus den Unteransprüchen. Voraussetzung für den Einsatz der Regeleinrichtung ist eine im modulierenden oder pulsierenden Betrieb arbeitende Energiequelle, deren abgegebene Leistung steuerbar ist. Im Falle eines Brenners wird die Brennstoffzufuhr und zwecks Optimierung der Energieausbeute gleichzeitig auch die Verbrennungsluftzufuhr geregelt. Im Falle einer Warmwasserheizung kann statt dessen auch ein Mischventil und im Falle einer Warmluftheizung eine Mischklappe die Steuerung der Energiezufuhr übernehmen.

Zur Erläuterung der Erfindung anhand eines Ausführungsbeispiels wird nachfolgend auf die Zeichnungen Bezug genommen. Hierin zeigt
- Fig. 1: den Verlauf der Schaltzyklen eines Brenners in Abhängigkeit vom Wärmebedarf bei herkömmlichen Temperaturregeleinrichtungen für einen Brenner, welcher nur zwischen zwei Betriebszuständen (Aus/ Vollast) umschaltbar ist;
- Fig. 2: das Blockschaltbild einer Regeleinrichtung gemäß der Erfindung und
- Fig. 3: eine der Fig. 1 entsprechende Darstellung der Schaltzyklen einer Regeleinrichtung gemäß der Erfindung.

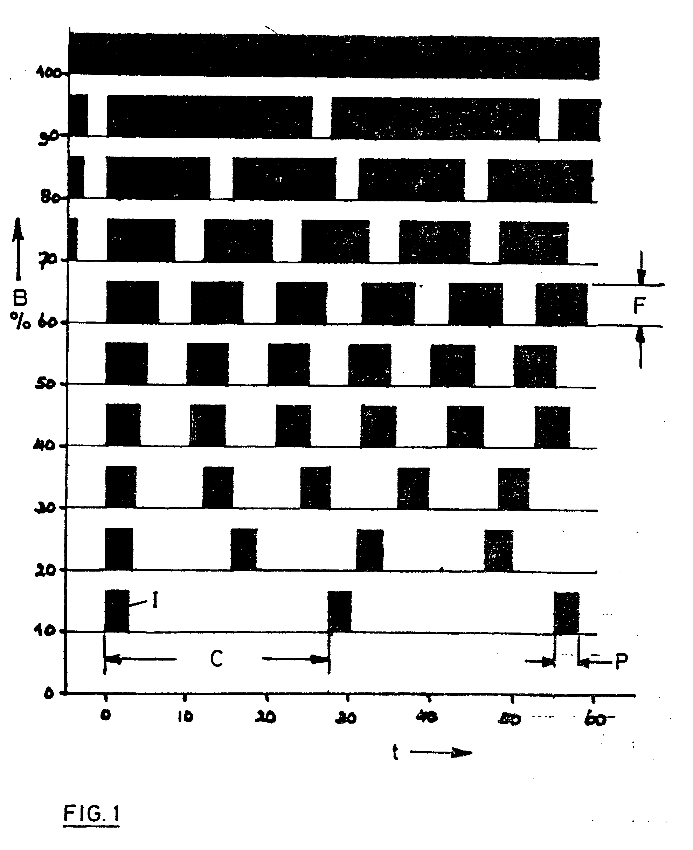

In Fig. 1 sind über der Zeit t die einzelnen Einschaltintervalle I des Brenners in Abhängigkeit vom Wärmebedarf B wiedergegeben, der in Prozent der maximalen Brennerleistung angegeben ist. Im obersten Kurvenzug ist der Fall dargestellt, daß bei sehr niedriger Raumtemperatur der Brenner ständig mit Vollast, d. h. mit B = 100 % läuft. Im untersten Kurvenzug hingegen ist der Brenner nur selten und nur für kurze Zeitintervalle p eingeschaltet. Mit zunehmendem Wärmebedarf ändert sich sowohl der zeitliche Abstand C zwischen zwei aufeinanderfolgende Einschaltperioden, d. h. die Länge des Schaltzyklus, als auch die Einschaltdauer P im jeweiligen Schaltzyklus. Projiziert man beispielsweise den Schaltzyklus C des untersten Kurvenzuges bei einem Wärmebedarf von 10 % auf den Kurvenzug bei 60 % Wärmebedarf, so zeigt sich, daß dort anstelle eines einzigen relativ kurzen Einschaltintervalls nunmehr während der gleichen Zeitspanne C drei Einschaltintervalle doppelter Länge vorliegen, also im Vergleich zur Kurve bei 10 % die 6-fache Wärmemenge, nämlich 60 % erzeugt wird. Die Wärmeleistung F, d. h. die Amplitude der einzelnen Einschaltimpulse ist in allen Fällen gleich. Besonders bei geringem Wärmebedarf führt die Zufuhr der Wärme jeweils unter Volllast leicht zu einem Überschwingen der Temperatur. Zwischen dem Zeitpunkt der Wärmeerzeugung am Brenner und der Reaktion des Raumthermostaten vergeht nämlich eine beträchtliche Vorlaufzeit, die einerseits durch die erforderliche Erhitzung des Übertragungsmediums, zumeist Wasser, im Wärmetauscher die Zuleitung des erhitzten Mediums in den zu erwärmenden Raum und dessen Radiatoren sowie die Erwärmung der Raumluft bedingt ist. In den meisten Fällen werden also die Einschaltimpulse für den benötigten Wärmebedarf zu lang sein und folglich die Raumtemperatur nach Ablauf der Verzögerungszeit den Sollwert zunächst merklich überschreiten. Solche Temperaturschwankungen sind nicht nur unangenehm, sondern bedeuten auch einen Mehrverbrauch an Primärenergie, z. B. Gas oder Heizöl. Die Länge der Zyklen C hängt darüber hinaus von zahlreichen Einflußfaktoren ab. Wird beispielsweise in dem zu beheizenden Raum zusätzliche Wärme erzeugt, etwa durch Sonneneinstrahlung, Einschaltung der Beleuchtung oder durch Maschinen, so verkürzen sich die Einschaltintervalle des Brenners bei gleichzeitiger Verlängerung der einzelnen Schaltzyklen C. Das ständige Ein- und Abschalten des Brenners ist auch wegen der damit verbundenen Gefahr von Kondensatbildung ungünstig. Fig. 1 läßt erkennen, daß bezogen auf einen vorgegebenen Schaltzyklus C die Einschaltdauer P dem Wärmebedarf B proportional ist (siehe obiger Vergleich einzelner Kurvenzüge bei 10 % und 60 %).

Eine gewisse Vergleichmäßigung der Wärmeabgabe an den Raum läßt sich erzielen, wenn man bei geringem Wärmebedarf die Schaltzyklen verkürzt, d.h. den Brenner öfter, aber dann jeweils für eine kürzere Zeitspanne einschaltet. Die oben erwähnte US-A 44 60 123 zeigt eine Regeleinrichtung dieser Art für eine Strahlungsheizvorrichtung. Ein mit einem Strahlungsheizer beheizter Raum ist besonders starken Temperaturschwankungen unterworfen, weil der Heizer nach dem Abschalten sofort seine Wärmeabgabe einstellt und beim Wiedereinschalten äußerst schnell die volle Strahlungsleistung erreicht.

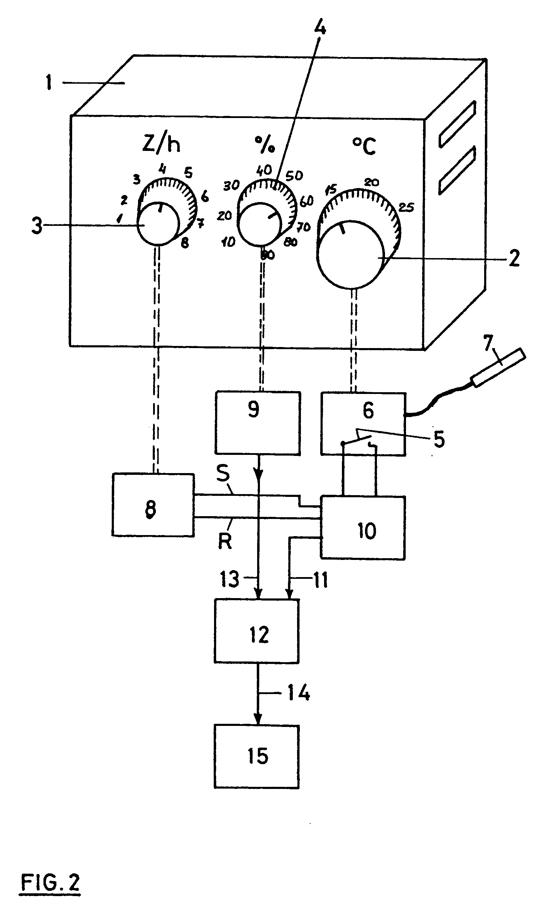

Zur Erläuterung der Erfindung zeigt Figur 2 schematisch das Gehäuse 1 eines Raumthermostaten, auf dessen Vorderseite drei Einstellknöpfe angebracht sind. Mit dem rechten Einstellknopf 2 wird der Temperatursollwert in bekannter Weise vorgegeben. Zusätzlich kann eine Nachtabsenkung vorgesehen sein. Der linke Einstellknopf 3 dient zur Vorgabe einer gewünschten Anzahl von Schaltzyklen pro Stunde oder sonstiger Zeiteinheit. Diese Vorgabe wird zumeist vom Installateur vorgenommen und richtet sich in erster Linie nach den klimatischen und Umweltverhältnissen. In Gegenden mit rauhem Klima ist es zweckmäßig, die Schaltzyklen kürzer zu wählen als in Gegenden mit einem ausgeglichenen Klima und geringfügigen Außentemperaturschwankungen. Der mittlere Einstellknopf 4 dient zur Vorgabe einer gewünschten Einschaltdauer pro Schaltzyklus, gemessen in Prozent. Auch diese Einstellung wird üblicherweise vom Installateur der Heizungsanlage vorgenommen und richtet sich in erster Linie nach den Gegebenheiten der Heizungsanlage, insbesondere dem räumlichen Abstand zwischen Brenner und Meßraum, dem Leitungsquerschnitt, der Pumpenleistung und ähnlichen für die Wärmeübertragung maßgeblichen Faktoren. Der Raumthermostat 1 enthält ferner einen Thermostatschalter 5, welcher von einem Temperaturmeßsystem 6 betätigt wird. Dieses erhält einerseits das Signal eines Temperaturfühlers 7, der innerhalb oder außerhalb des Raumthermostatgehäuses angeordnet sein kann, und andererseits den vorgegebenen Sollwert eingestellt am Temperaturwählknopf 2. Temperaturfühler 7 und Einstellknopf 2 können beispielsweise in bekannter Weise auf eine Ausdehnungskapsel einwirken, oder es ist ein Bimetalltemperaturfühler vorgesehen. Auch beliebige andere, insbesondere elektronische Temperaturfühler können für diese Zwecke eingesetzt werden. Entsprechend sind die Vorgabemittel für den Sollwert auszubilden, welche analog oder digital arbeiten können.

Auch die übrigen unterhalb des Gehäuses 1 dargestellten Baugruppen des Temperaturreglers können entweder mit im Thermostatgehäuse 1 oder hiervon getrennt in einem besonderen Gehäuse untergebracht sein. Der Übersichtlichkeit wegen sind sie unterhalb des Gehäuses 1 dargestellt. Mit dem Einstellknopf 3 wird wie erwähnt die Anzahl der Schaltzyklen pro Stunde vorgegeben, und zwar an einem ersten Zeitgeber 8. Ein zweiter Zeitgeber 9 wird mit Hilfe des Einstellknopfes 4 auf die gewünschte Einschaltdauer der Energiequelle pro Schaltzyklus eingestellt. Die tatsächliche Einschaltdauer der Energiequelle wird anhand der Schließzeit des Schalters 5 gemessen. Hierzu ist an den Schalter 5 oder den ihn betätigenden Mechanismus bzw. im Falle eines elektronischen Schalters an die ihn durchschaltende Steuerschaltung ein Zähler 10 angeschlossen. Er mißt jeweils die Schließdauer des Schalters 5 während eines Schaltzyklus. Zu diesem Zweck ist der Zähler über eine Setzleitung S und eine Rückstelleitung R mit dem Zeitgeber 8 verbunden, um zu Beginn jedes Schaltzyklus eingeschaltet und am Ende des Schaltzyklus zurückgesetzt zu werden. Gegebenenfalls genügt auch eine einzige Rückstelleitung R. Der Zähler liefert auf der Leitung 11 ein Ausgangssignal, welches der Schließzeit des Schalters 5 pro Schaltzyklus proportional ist. Dabei kann es sich um ein Analogsignal, oder ein Digitalsignal handeln. Dieses Signal gelangt zu einem Vergleicher 12, welchem zum andern vom zweiten Zeitgeber 9 ein der gewünschten Einschaltdauer pro Schaltzyklus entsprechendes Sollwertsignal über die Leitung 13 zugeführt wird, wie es durch die Einstellung am Drehknopf 4 vorgegeben ist. An den Thermostatschalter 5 ist beispielsweise die Erregerwicklung eines Einschaltmagnetventils angeschlossen, mit dem ein den Brenner mit Gas versorgendes Brennersteuergerät eingeschaltet wird. Als Beispiel sei auf die Regeleinrichtung gemäß DE-A 31 14 942 verwiesen.

Der Vergleicher 12 bildet ein Regelabweichungssignal entsprechend der Differenz der ihm vom Zähler 10 und vom zweiten Zeitgeber 9 zugeführten Zeitsignale, welches anzeigt, ob der Brenner im betreffenden Schaltzyklus länger oder kürzer als der vorgegebenenen Einschaltdauer entsprechend in Betrieb war. Dieses Regelabweichungssignal auf der Leitung 14 gelangt zu einem modulierenden Antrieb, beispielsweise einem Gasdruckregler, wie er aus DE-A 30 15 980 bekannt ist und auch in der Regeleinrichtung gemäß DE-A 31 14 942 Anwendung findet. Mit diesem modulierenden Antrieb wird die Brennerleistung, d. h. die dem Brenner pro Zeiteinheit zugeführte Gas- oder Ölmenge verändert, also der Durchlaßquerschnitt des Brennstoffventils gesteuert. War der Brenner während des letzten Schaltzyklus länger als vorgesehen in Betrieb, so wird die Brennerleistung um einen solchen Betrag erhöht, daß wieder die gewünschte Einschaltdauer pro Zyklus erreicht wird.

Lag die Brenndauer hingegen unterhalb der gewünschten Einschaltdauer, so wird die Leistung verringert und damit die Einschaltdauer bis zum Erreichen der Solltemperatur verlängert. Folgendes Beispiel möge dies verdeutlichen: Es sei angenommen, daß der Einstellknopf 3 auf 6 Schaltzyklen pro Stunde eingestellt ist, d. h. die Zykluszeit beträgt 10 Minuten. Mit dem Einstellknopf 4 sei eine Einschaltdauer pro Zyklus von 70 % eingestellt, d. h. in jedem Zyklus von 10 Min. soll der Brenner 7 Min. laufen. Die tatsächliche Laufdauer des Brenners richtet sich wie üblich nach der vom Temperaturfühler 7 gemessenen Temperatur. Erst wenn der am Drehknopf 2 eingestellte Sollwert erreicht ist, wird der Brenner stillgesetzt, d h. seine Einschaltdauer beendet. Ist die vom Zähler 10 gemessene tatsächliche Einschaltdauer pro Zyklus länger als die vom zweiten Zeitgeber 9 vorgegebene Einschaltdauer, so liefert der Vergleicher 12 ein dem Verhältnis der tatsächlich gemessenen Einschaltdauer p zur gewünschten Einschaltdauer Q entsprechendes Ausgangssignal auf der Leitung 14 an den modulierenden Stellantrieb 15. Liegt beispielsweise die gemessene Einschaltdauer bei 9 Min. und die gewünschte bei 7 Min., so wird über den Antrieb 15 die dem Brenner pro Zeiteinheit zugeführte Brennstoffmenge um den Faktor 9/7 erhöht. Sollte die gemessene Einschaltdauer länger als ein Zyklus sein, so wird die Brennstoffzufuhr zunächst im Verhältnis 1 Zyklus/Q erhöht und dies solange wiederholt, bis p kleiner als 1 Zyklus wird. Liegt umgekehrt die tatsächliche Einschaltdauer p unterhalb der gewünschten Einschaltdauer Q, so wird der Durchlaß durch das Brennstoffventil um einen entsprechenden Faktor, beispielsweise 5/7 verringert. Fordert der Raumthermostat während eines ganzen Zyklus keine Wärmezufuhr an, so wird die Einstellung des Brennstoffventils auf einen vorgegebenen Mindestdurchsatz reduziert.

Anstelle der Einstellknöpfe 2 bis 4 kann auch eine digitale Eingabetastatur vorgesehen sein, welche durch entsprechende Vorwahltasten auf die einzelnen Funktionen umschaltbar ist. Dieser Tastatur ist dann eine entsprechende ebenfalls umschaltbare digitale Anzeigevorrichtung zugeordnet. Die Funktionen der beiden Zeitgeber 8 und 9, des Zählers 10 sowie des Vergleichers 12 lassen sich leicht durch einen Mikroprozessor realisieren. Ein gemeinsamer, hier nicht dargestellter Taktgeber liefert den Systemtakt für Zeitgeber, Zähler und Vergleicher. Sofern ein digital steuerbares Stellglied 15 Verwendung findet, kann der Vergleicher unmittelbar auf das Stellglied einwirken. Andernfalls ist ein D/A-Umsetzer zwischenzuschalten. Die Erfindung kann jedoch auch mit herkömmlichen mechanischen bzw. elektromechanischen Baugruppen, beispielsweise Zeitschaltwerken realisiert werden, deren jeweilige Stellung durch den Abgriff eines Potentiometers wiedergegeben ist. Dem Vergleicher werden dann der Potentiometerstellung entsprechende elektrische Spannungen oder Ströme zugeführt.

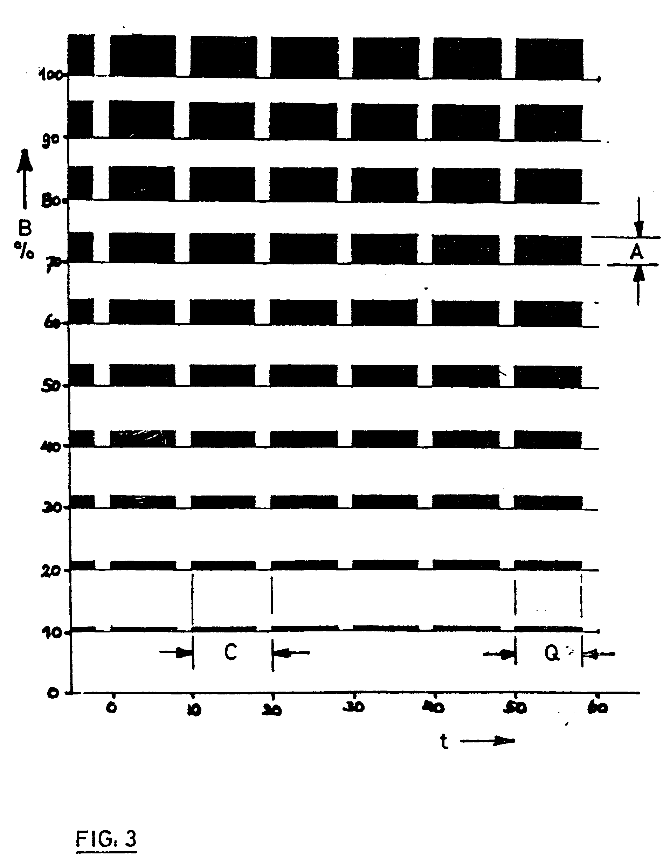

Das Ergebnis der geschilderten Arbeitsweise läßt sich anhand von Fig. 3 verdeutlichen. Unabhängig vom Wärmebedarf B sind im Gleichgewichtszustand der Regeleinrichtung sowohl die Zykluszeit C, als auch die Einschaltzeit Q pro Schaltzyklus konstant. Geändert wird vielmehr die Brennstoffmenge A pro Zeiteinheit, d. h. der Öffnungsquerschnitt des Brennstoffventils bzw. die Stellung des Mischventils. Bei geringem Wärmebedarf wird der Brenner mit geringer Leistung betrieben, bei hohem Wärmebedarf mit hoher Leistung. Dementsprechend wird die Luftmenge angepaßt. Damit ergibt sich, wie ein Vergleich der Figuren 3 und 1 zeigt, eine Vergleichmäßigung der Betriebszyklen, wodurch sowohl die Einhaltung der gewünschten Solltemperatur erleichtert und verbessert, als auch der Brennstoffverbrauch verringert wird. Fig. 3 zeigt den quasi stationären oder eingeschwungenen Zustand der Anlage, wenn also die vorgegebene Einschaltdauer und die gemessene Einschaltdauer pro Schaltzyklus übereinstimmen. Wie oben erwähnt, treten bei Änderungen des Wärmebedarfs zunächst Abweichungen der gemessenen Einschaltdauer auf, die im nächsten Zyklus durch eine entsprechende Anpassung der Brennstoffmenge A kompensiert werden. Bei einer Änderung des Wärmebedarfs von beispielsweise auf 20 auf 30 % der maximal verfügbaren Wärmemenge geht also der tatsächliche Kurvenverlauf von der Zeile entsprechend 20 % nach einem Übergangszyklus auf die Zeile entsprechend 30 % über.

Aus der Schilderung des Ausführungsbeispiels ergibt sich, daß die gleiche Methode auch bei Kühlbetrieb mit Vorteil anwendbar ist.

## Patentansprüche

1. Regeleinrichtung für eine Heiz- oder Kühlvorrichtung mit einer durch einen Raumthermostaten ein- und abschaltbaren Energiequelle, mit
a) einem ersten Zeitgeber (3, 8) zur Vorgabe einer gewünschten Zykluszeit (C) für die Einschaltung der Energiequelle;
b) einem Zeitmesser (10) sowie einem Vergleicher (12) zum Vergleichen gemessener Zeitspannen; und mit
c) einem Stellglied (15) zum Steuern der Energiezufuhr;
**dadurch gekennzeichnet**, daß
d) der erste Zeitgeber (3, 8) einstellbar ist;
e) ein zweiter einstellbarer Zeitgeber (4, 9) vorgesehen ist zur Vorgabe einer gewünschten Einschaltdauer (Q) der Energiequelle innerhalb jedes Schaltzyklus (C);
f) der Zeitmesser (10) die durch den Energiebedarf bestimmte tatsächliche Einschaltdauer der Energiequelle pro Schaltzyklus (C) mißt;
g) der Vergleicher (12) die tatsächliche (p) mit der vorgegebenen (Q) Einschaltdauer pro Schaltzyklus (C) vergleicht und ein dem Zeitunterschied zwischen tatsächlicher (p) und vorgegebener (Q) Einschaltdauer entsprechendes Regelabweichungssignal (Leitung 14) erzeugt;
h) das Stellglied (15) in Abhängigkeit vom genannten Regelabweichungssignal die während der Einschaltdauer der Energiequelle pro Zeiteinheit erzeugte Energie steuert.

2. Regeleinrichtung nach Anspruch 1, **dadurch gekennzeichnet**, daß der Zeitmesser (10) durch den Raumthermostaten (6) gesteuert ist.

3. Regeleinrichtung nach Anspruch 1 oder 2, **dadurch gekennzeichnet**, daß die Zeitgeber (8,9) und der Zeitmesser (10) sowie der Vergleicher (12) durch einen Mikroprozessor gebildet sind.

4. Regeleinrichtung nach einem der Ansprüche 1 bis 3, **gekennzeichnet durch** ein vom Regelabweichungssignal gesteuertes, einem Brenner vorgeschaltetes Brennstoffventil sowie ein gleichsinnig gesteuertes Stellglied für die dem Brenner zugeführte Verbrennungsluftmenge.

5. Regeleinrichtung nach einem der Ansprüche 1 bis 3, **gekennzeichnet durch** ein vom Regelabweichungssignal gesteuertes Mischventil.

## Claims

1. Apparatus for controlling a heating or cooling system including an energy source which can be switched on and off by means of a room thermostat, comprising:
a) a first timer (3, 8) for setting a desired cycling time (C) for switching on the energy source;
b) a time metering unit (10) and a comparator (12) for comparing measured time intervals; and
c) a control element (15) for controlling the supply of energy;
**characterized in that**
d) the first timer (3, 8) is adjustable;
e) a second adjustable timer (4, 9) is provided for setting a desired switch-on period (Q) of the energy source during each switching cycle (C);
f) the time metering unit measures the actual switch-on period of the energy source in each switching cycle (C) as determined by the demand of energy;
g) the comparator (12) compares the actual switch-on period (p) with the predetermined switch-on period (Q) in each switching cycle (C) and generates an error signal (line 14) corresponding to the time difference between the actual (p) and the predetermined (Q) switch-on period;
h) the control element dependent on said error signal controls the energy generated per time unit during the switch-on period of the energy source.

2. Control apparatus according to claim 1, **characterized in that** the time measuring unit (10) is controlled by the room thermostat (6).

3. Control apparatus according to claim 1 or 2, **characterized in that** the timer (8, 9) and the time measuring unit (10) as well as the comparator (11) are formed by a microprocessor.

4. Control apparatus according to one of claims 1 to 3, **characterized by** a fuel valve in the supply line to a burner, which valve is controlled by the error signal, and by a control element for the supply of combustion air to the burner with said control element being adjusted in the same sense as the fuel valve.

5. Control apparatus according to one of claims 1 to 3, **characterized by** a mixing valve controlled by said error signal.

## Revendications

1. Dispositif de régulation avec un thermostat d'ambiance, pour une installation de chauffage ou de réfrigération avec une source d'énergie pouvant être mise en ou hors fonctionnement par un thermostat d'ambiance, avec
a) une première horloge (3, 8) pour l'allocation d'un temps de cycle (C) souhaité pour le fonctionnement de la source d'énergie ;
b) un appareil de mesure de temps (10) ainsi qu'un comparateur (12) pour la comparaison d'espaces de temps mesurés ; et avec
c) un organe de réglage (15) pour la commande d'amenée d'énergie ; caractérisé en ce que
d) la première horloge (3, 8) est réglable ;
e) une deuxième horloge réglable (4, 9) est prévue pour l'allocation d'une durée de fonctionnement (Q) souhaitée de la source d'énergie, à l'intérieur de chaque cycle de commutation (C) ;
f) l'appareil de mesure de temps (10) mesure la durée de fonctionnement effective, déterminée par les besoins en énergie, de la source d'énergie par cycle de commutation (C) ;
g) le comparateur (12) compare la durée de fonctionnement effective (p) par cycle de commutation (C) avec celle souhaitée (Q), et engendre un signal d'écart de régulation (ligne 14) correspondant à la différence de temps entre les durées de fonctionnement effective (p) et souhaitée (Q) ;
h) l'organe de réglage (15) commande l'énergie engendrée par unité de temps durant la durée de fonctionnement de la source d'énergie, en fonction du signal d'écart de régulation cité.

2. Dispositif de régulation selon la revendication 1, caractérisé en ce que l'appareil de mesure de temps (10) est commandé par le thermostat d'ambiance (6).

3. Dispositif de régulation selon la revendication 1 ou 2, caractérisé en ce que les horloges (8, 9) et l'appareil de mesure de temps (10) ainsi que le comparateur (12) sont constitués par un microprocesseur.

4. Dispositif de régulation selon l'une des revendications 1 à 3, caractérisé par une soupape de combustible située en amont d'un brûleur et commandée par le signal d'écart de régulation, ainsi que par un organe de réglage, commandée dans le même sens, pour la quantité d'air de combustion amenée au brûleur.

5. Dispositif de régulation selon l'une des revendications 1 à 3, caractérisé par un mitigeur commandé par le signal d'écart de régulation.
